# EUROPÄISCHE PATENTSCHRIFT

(11) **EP 2 678 571 B1**
(45) Veröffentlichungstag und Bekanntmachung des Hinweises auf die Patenterteilung: **01.04.2015**
(21) Anmeldenummer: 12705622.4
(22) Anmeldetag: 22.02.2012
(51) Int. Cl.: F16B 7/04

(54) **ECKVERBINDER FÜR HOHLPROFILE**
CORNER CONNECTOR FOR HOLLOW PROFILES
DISPOSITIF D'ASSEMBLAGE D'ANGLE POUR PROFILÉS CREUX

(30) Priorität: 25.02.2011 DE 102011012435; 25.02.2011 DE 102011012436; 25.02.2011 DE 102011012433; 25.02.2011 DE 102011012434
(43) Veröffentlichungstag der Anmeldung: 01.01.2014
(73) Patentinhaber: C E S Control Enclosure Systems GmbH, 61348 Bad Homburg v. d. Höhe (DE)
(72) Erfinder: SCHAAF, Igor, Harry, 77836 Rheinmünster (DE); MAZURA, Paul, 76307 Karlsbad (DE); NICOLAI, Walter, 35418 Buseck (DE); JOCHAM, Simon, 80469 München (DE)
(74) Vertreter: Beyer, Andreas
(86) Internationale Anmeldenummer: PCT/EP2012/000767
(87) Internationale Veröffentlichungsnummer: WO 2012/113549

(56) Entgegenhaltungen:
- EP-A1- 1 130 275
- FR-A1- 2 674 581

## Beschreibung

Die Erfindung betrifft sogenannte Eckverbinder für Hohlprofile.

Hohlprofile, die beispielsweise aus Metall oder Kunststoff bestehen können, eignen sich zur Herstellung von Rahmen und Gestellen, wie sie in verschiedenen Anwendungsgebieten benötigt werden, etwa in der Elektroindustrie (z.B. als Rahmenelemente für Schaltschränke), im Maschinen- und Anlagenbau (etwa als Maschinenuntergestell oder ähnliches), aber auch in der Möbelindustrie (beispielsweise für Regalsysteme und ähnliches). Hohlprofile der genannten Art können aus Metallblech geformt sein, es kann sich bei ihnen aber auch um Stranggussteile (etwa aus Aluminium oder einem Kunststoff) handeln. Unabhängig von der Art ihrer Herstellung und dem Material, aus dem sie bestehen, müssen die üblicherweise langgestreckten Hohlprofile jedoch an ihren Enden mit weiteren Hohlprofilen verbunden werden, um beispielsweise einen Rahmen, ein Gestell oder ähnliches zu bilden. Bekannt ist es in diesem Zusammenhang beispielsweise, die Enden aneinanderzufügender Hohlprofile in der gewünschten geometrischen Ausrichtung miteinander zu verschweißen, um eine stabile Eckverbindung zu erzielen. Ersichtlich ist ein solches Verschweißen arbeits- und zeitaufwendig.

Aus der EP 1 130 275 A1 ist ein Eckverbinder für offene Profile bekannt, der ein aus vier miteinander verbundenen Seitenwänden gebildetes Basisteil aufweist, welches die Form eines an zwei gegenüberliegenden Seiten offenen Würfels hat. Ferner umfasst dieser Eckverbinder ein oder zwei plattenförmige Zusatzelemente, mit denen die beiden offenen Seiten des würfelförmigen Basisteils verschlossen werden können. Am Umfangsrand der beiden offenen Deckflächen des Basisteils sind Aussparungen ausgebildet, die mit entsprechenden Vorsprüngen am Umfangsrand des jeweiligen Zusatzelements korrespondieren, so dass das Zusatzelement zum Verschließen der offenen Deckfläche in die Aussparungen eingelegt werden kann. Die Aussparungen erstrecken sich parallel zum äußeren Umfangsrand des Basisteils. Die Vorsprünge am Zusatzelement erstrecken sich vom Umfangsrand des Zusatzelements radial nach außen.

Aus der FR 2 674 881 A1 ist ein weiterer Eckverbinder mit einem im Querschnitt quadratischen, vollständig geschlossenen Profil bekannt, in das Zusatzelemente eingesteckt werden können.

Der Erfindung liegt die Aufgabe zugrunde, eine verbesserte Möglichkeit zur Verbindung von Hohlprofilen über Eck anzugeben, die ohne Schweißen auskommt, einfach wieder gelöst werden kann und dennoch hohe Stabilitätsansprüche erfüllt, wenig Montagezeit benötigt und flexibel einsetzbar ist.

Zur Lösung dieser Aufgabe ist erfindungsgemäß ein Eckverbinder für Hohlprofile bereitgestellt, der die im beigefügten Patentanspruch 1 angegebenen Merkmale aufweist. Demnach umfasst der erfindungsgemäße Eckverbinder ein Basiselement, das aus einem ersten und einen zweiten, jeweils im Wesentlichen plattenförmigen, rechteckigen Wandabschnitt gebildet ist. Jeder Wandabschnitt hat vier Seitenränder, eine Innenseite und eine Außenseite. Der erste und der zweite Wandabschnitt sind an jeweils einem einen Verbindungsrand bildenden Seitenrand rechtwinklig zueinander und einstückig miteinander verbunden, beispielsweise durch Schweißen, Formgießen, Verschmelzen oder jede andere Herstellungs- oder Verbindungsart, die im Ergebnis zu einer einstückigen Verbindung der beiden Wandabschnitte führt. Auf ihrer Innenseite sind der erste und der zweite Wandabschnitt jeweils mit einer ersten Führungsund Verbindungsnut versehen, die sich von einem dem Verbindungsrand benachbarten Seitenrand in einer Richtung parallel zum Verbindungsrand erstreckt. Diese Führungs- und Verbindungsnuten können nachträglich in die beiden Wandabschnitte eingearbeitet sein, etwa durch spanende oder erodierende Bearbeitung, sie können beispielsweise aber auch unmittelbar bei der Erzeugung des Basiselements entstehen, etwa durch eine entsprechende Ausformung einer Gießform.

Der erfindungsgemäße Eckverbinder weist ferner zumindest ein im Wesentlichen plattenförmiges, rechteckiges Zusatzelement auf, das ebenfalls vier Seitenränder, eine Innenseite und eine Außenseite hat. Von der Innenseite des Zusatzelements stehen zwei zu den ersten Führungs- und Verbindungsnuten komplementäre Führungs- und Verbindungsvorsprünge hervor, die in einer zum Verbindungsrand des Basiselements parallelen Richtung in die ersten Führungs- und Verbindungsnuten des Basiselements einschiebbar sind und die im vollständig eingeschobenen Zustand das Zusatzelement zur Bildung eines rechtwinklig zum ersten und zweiten Wandabschnitt angeordneten dritten Wandabschnitts bündig an dem Basiselement festlegen. Das oder jedes Zusatzelement kann auf dieselbe Weise wie oben zum Basiselement angegeben hergestellt sein und aus dem gleichen Material wie das Basiselement bestehen oder aus einem unterschiedlichen Material. Ist beispielsweise das Basiselement sehr stabil ausgeführt, braucht je nach Anwendungsfall das Zusatzelement unter Umständen weniger stabil zu sein und kann gegebenenfalls aus einem anderen Material als das Basiselement bestehen. Bei bevorzugten Ausgestaltungen der vorliegenden Erfindung bestehen Basis- und Zusatzelement jedoch aus dem gleichen Material.

Der erfindungsgemäß aufgebaute Eckverbinder bietet die Möglichkeit, an den Außenseiten der Wandabschnitte zwei, drei oder sogar vier Hohlprofile in jeweils rechtwinklig zueinander stehender Anordnung stabil zu verbinden, etwa durch Verschrauben mit dem Eckverbinder. Das nur in einer Richtung parallel zum Verbindungsrand in das Basiselement einschiebbare Zusatzelement bildet im vollständig eingeschobenen Zustand mit dem Basiselement einen stabilen Verbindungsblock, der einfach montierbar und zerlegbar ist. Vorzugsweise sind die ersten Führungs- und Verbindungsnuten hinterschnitten ausgebildet, beispielsweise in Gestalt einer Schwalbenschwanznut. Die ersten Führungs- und Verbindungsnuten können auch so ausgeführt sein, dass sich bei zunehmendem Einführen der Führungs- und Verbindungsvorsprünge eine Klemmwirkung ergibt, die das Zusatzelement ohne weitere Vorkehrungen sicher am Basiselement fixiert. Mit "bündig festgelegt" ist hier gemeint, dass das Zusatzelement in vollständig eingeschobenem Zustand die dritte (oder vierte) Wand eines würfel- oder quaderförmigen Eckverbindungsblocks bildet. Die Wandabschnitte des Basiselements und der Zusatzelemente sind bei einer bevorzugten Ausgestaltung quadratisch, der sich ergebende Eckverbinder ist demzufolge in seiner Grundform würfelförmig.

Obwohl eine Zentrierung des Zusatzelements bezüglich des Basiselements bereits durch das Zusammenwirken der ersten Führungs- und Verbindungsnuten mit den Führungs- und Verbindungsvorsprüngen erreicht werden kann, ist bei einer bevorzugten Ausführungsform des Eckverbinders im Basiselement nahe dem Verbindungsrand eine parallel zum Verbindungsrand verlaufende, sich vorzugsweise konisch verjüngende Zentrierausnehmung vorhanden, in die beim Einschieben des Zusatzelements in das Basiselement ein mit der Zentrierausnehmung fluchtender, von der Innenseite des Zusatzelements hervorragender, vorzugsweise ebenfalls konischer Zentriervorsprung eingreift. Der Zentriervorsprung ist komplementär zur Zentrierausnehmung ausgeführt und sorgt dafür, dass die Seitenränder des Zusatzelements exakt parallel zu den angrenzenden Seitenrändern des Basiselements verlaufen. Bei Ausführungsformen des erfindungsgemäßen Eckverbinders, die die Zentrierausnehmung und den damit zusammenwirkenden Zentriervorsprung umfassen, wirken die ersten Führungs- und Verbindungsnuten mit den Führungs- und Verbindungsvorsprüngen vorzugsweise nicht klemmend zusammen, um die Zentrierwirkung des in die Zentrierausnehmung eingreifenden Zentriervorsprungs nicht zu beeinträchtigen.

Um die ersten Führungs- und Verbindungsnuten von Drehmomenten zu entlasten, die auf die Hohlprofile wirken können, steht bei einer bevorzugten Ausführungsform des Eckverbinders von der Innenseite des ersten und des zweiten Wandabschnitts jeweils ein Stützflansch rechtwinklig hervor, der mit einer Stützausnehmung versehen ist, in die beim Einschieben des Zusatzelements in das Basiselement ein an einem freien Ende des zugehörigen Führungs- und Verbindungsvorsprungs ausgebildeter, komplementärer Stützvorsprung mit Passsitz eingreift. Die Stützausnehmung kann den Stützflansch vollständig durchsetzen. Der Stützvorsprung kann beispielsweise zylindrisch sein.

Wenn ein Zusatzelement auf zwei verschiedenen Seiten des Basiselements anbringbar, d.h. einschiebbar sein soll oder wenn an einem Basiselement zwei Zusatzelemente auf gegenüberliegenden Seiten des Basiselements anbringbar sein sollen, dann ist der erste und der zweite Wandabschnitt des Basiselements auf seiner Innenseite jeweils mit einer zweiten Führungs- und Verbindungsnut versehen, die sich von einem dem Verbindungsrand benachbarten Seitenrand parallel zum Verbindungsrand erstreckt, der dem Seitenrand gegenüberliegt, von dem sich die erste Führungs- und Verbindungsnut erstreckt, wobei in die zweite Führungs- und Verbindungsnut ein zugehöriger Führungs- und Verbindungsvorsprung eines Zusatzelements einschiebbar ist, um im vollständig eingeschobenen Zustand ein weiteres Zusatzelement zur Bildung eines rechtwinklig zum ersten und zweiten Wandabschnitt angeordneten vierten Wandabschnitts bündig an dem Basiselement festzulegen. Jede erste Führungs- und Verbindungsnut kann übergangslos in die zweite Führungs- und Verbindungsnut übergehen oder kann separat von der zweiten Führungs- und Verbindungsnut ausgebildet sein.

Zur Befestigung eines Hohlprofils an einem erfindungsgemäßen Eckverbinder kann ein Spannelement zum Einsatz kommen, welches bei bevorzugten Ausgestaltungen das Hohlprofil der Länge nach vollständig durchsetzt. Ein solches Hohlprofilspannelement kann beispielsweise eine Stange sein, deren Endabschnitte mit einem Außengewinde zur Aufbringung einer Spannmutter versehen sind. Das Hohlprofilspannelement kann auch eine Gewindestange sein. Bei erfindungsgemäßen Eckverbindern für Hohlprofile, die ein Hohlprofilspannelement verwenden, ist vorzugsweise jeder Wandabschnitt mit einer Durchgangsöffnung für ein solches Hohlprofilspannelement versehen. Jedes Hohlprofil kann auf diese Weise an zwei gegenüberliegenden Eckverbindern verspannt und auf diese Weise sicher an den Eckverbindern befestigt werden. Gemäß einer Weiterbildung können solche Eckverbinder, die den weiter oben bereits beschriebenen Stützflansch aufweisen, eine weitere Durchgangsöffnung umfassen, die sich durch den Stützflansch erstreckt und mit der Durchgangsöffnung für ein Hohlprofilspannelement in dem Zusatzelement fluchtet. Bei einer solchen Ausführungsform kann das Zusatzelement unter Zuhilfenahme des Hohlprofilspannelements an dem Basiselement, genauer an den Stützflansch des Basiselements, verspannt werden, indem eine Spannmutter oder ähnliches auf dem Ende des Hohlprofilspannelements befestigt wird, das sich durch die Durchgangsöffnung des Zusatzelements und die weitere Durchgangsöffnung des Stützflansches erstreckt. Die Spannmutter kann so gestaltet sein, dass sie von einer Außenseite des Eckverbinders zugänglich ist.

Zur Montagevereinfachung sind die Durchgangsöffnungen für die Hohlprofilspannelemente vorzugsweise so ausgeführt, dass sie eine nicht-rotationssymmetrische Form haben, sich also in der Durchgangsöffnung für das Hohlprofilspannelement nicht drehen können. Beispielsweise kann jede Durchgangsöffnung für ein Hohlprofilspannelement eine kreisförmige Grundform haben, die zur Verdrehsicherung des Hohlprofilspannelements wenigstens eine Abflachung aufweist.

Zur genaueren und sichereren Positionierung der Hohlprofile auf dem Eckverbinder zeichnen sich bevorzugte Ausführungsformen des erfindungsgemäßen Eckverbinders dadurch aus, dass von der Außenseite der Wandabschnitte des Basiselements und jedes Zusatzelements an drei Ecken des jeweiligen Wandabschnitts ein Hohlprofilführungs- und -zentriervorsprung im Wesentlichen senkrecht zur Außenseite hervorsteht. Mittels dieser auf der Außenseite eines jeden Wandabschnitts vorhandener drei Vorsprünge wird ein auf dem Eckverbinder zu befestigendes Hohlprofil exakt lokalisiert und zugleich der Endabschnitt des Hohlprofils stabilisiert, was die Übertragung von auf das Hohlprofil wirkenden Drehmomenten auf den Eckverbinder verbessert. Vorzugsweise verjüngt sich eine Außenfläche eines jeden Hohlprofilführungs- und -zentriervorsprungs zu seinem freien Ende hin konisch. Dadurch hat ein Hohlprofil, welches auf die drei Vorsprünge gesteckt wird, zunächst mehr Spiel, was das Aufstecken erleichtert, und wird im Zuge des weiteren Aufsteckens zunehmend präziser geführt, bis sich beim vollständigen Aufstecken ein im Wesentlichen spielfreier Sitz des Hohlprofils auf den drei Vorsprüngen einstellt, der alternativ auch als Klemmsitz ausgestaltet sein kann.

Gemäß noch einer bevorzugten Weiterbildung sind die Hohlprofilführungs- und -zentriervorsprünge entlang zweier Seitenränder eines zugehörigen Wandabschnitts durch Verbindungsvorsprünge miteinander verbunden, deren Außenflächen komplementär zur inneren Profilgestalt eines zu verbindenden Hohlprofils gestaltet sind. Auf diese Weise kann der auf die Vorsprünge aufgesteckte Endabschnitt eines Hohlprofils noch besser stabilisiert und unterstützt werden.

Schließlich können Ausführungsformen des erfindungsgemäßen Eckverbinders, deren Wandabschnitte mit einer Durchgangsöffnung für ein Hohlprofilspannelement versehen sind, einen diese Durchgangsöffnung teilweise umgebenden Stützvorsprung aufweisen, der von der Außenseite des zugehörigen Wandabschnitts des Basiselements und/oder jedes Zusatzelements senkrecht hervorsteht und dessen Innenumfangsfläche zur radialen Stützung einer Außenfläche eines Hohlprofilspannelementaufnahmebereiches des Hohlprofils ausgeführt ist. Ergänzt werden kann dieser Stützvorsprung von einem Positioniervorsprung, der von der Außenseite des jeweiligen Wandabschnitts des Basiselements und/oder des Zusatzelements nahe einem von dem Stützvorsprung nicht umgebenen Bereich der Durchgangsöffnung für das Hohlprofilspannelement hervorsteht und dessen der Durchgangsöffnung für das Hohlprofilspannelement zugewandte Fläche zum Eingriff mit der Außenfläche des Hohlprofilspannelementaufnahmebereiches des Hohlprofils ausgeführt ist. Mittels eines solchen Positioniervorsprungs und des Stützvorsprungs wird somit der Hohlprofilspannelementaufnahmebereich eines Hohlprofils von zwei gegenüberliegenden Seiten her positioniert und gestützt.

Bei bevorzugten Ausgestaltungen des Eckverbinders ist jede Durchgangsöffnung für ein Hohlprofilspannelement nahe derjenigen Ecke eines Wandabschnitts angeordnet, an der auf der Außenseite kein Hohlprofilführungs- und -zentriervorsprung hervorsteht. Der Stützvorsprung und der Positioniervorsprung sorgen dann im Bereich dieser Ecke für eine zuverlässige Positionierung und Abstützung des aufzusteckenden Hohlprofils.

Eine bevorzugte Ausführungsform eines erfindungsgemäßen Eckverbinders wird im Folgenden anhand der beigefügten, schematischen Figuren näher erläutert. Es zeigt:
- Figur 1: eine räumliche Darstellung einer Ausführungsform eines erfindungsgemäßen Eckverbinders für Hohlprofile in einem Zustand, in dem ein Basiselement und ein Zusatzelement noch voneinander getrennt sind,
- Figur 2: eine räumliche Darstellung eines Endabschnitts eines Hohlprofils, von dem mehrere mit Hilfe des Eckverbinders aus Figur 1 miteinander verbunden werden können,
- Figur 3: eine Ansicht ähnlich Figur 1, jedoch von einer anderen Seite gesehen und mit teilweise in das Basiselement eingeführtem Zusatzelement,
- Figur 4: eine weitere räumliche Darstellung des Eckverbinders der Figuren 1 und 3 von schräg oben und im zusammengesetzten Zustand, und
- Figur 5: eine räumliche Explosionsdarstellung des Eckverbinders der Figuren 1 und 3 mit einer Abdeckkappe.

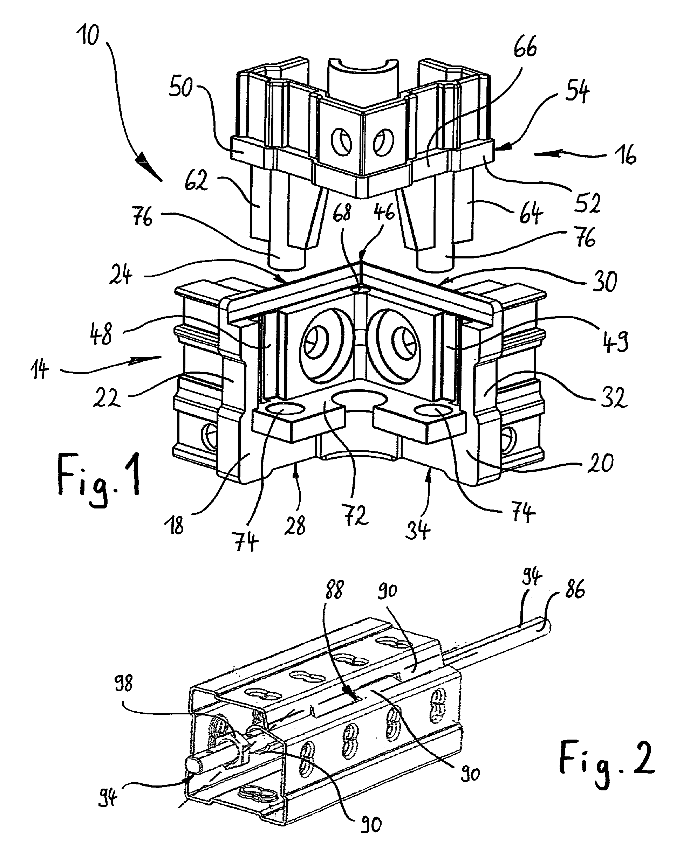

In Fig. 1 ist ein allgemein mit 10 bezeichneter Eckverbinder für Hohlprofile gezeigt, wobei der in Fig. 1 wiedergegebene Eckverbinder 10 zur Verbindung von drei Hohlprofilen 12 ausgebildet ist, von denen eines in Fig. 2 gezeigt ist.

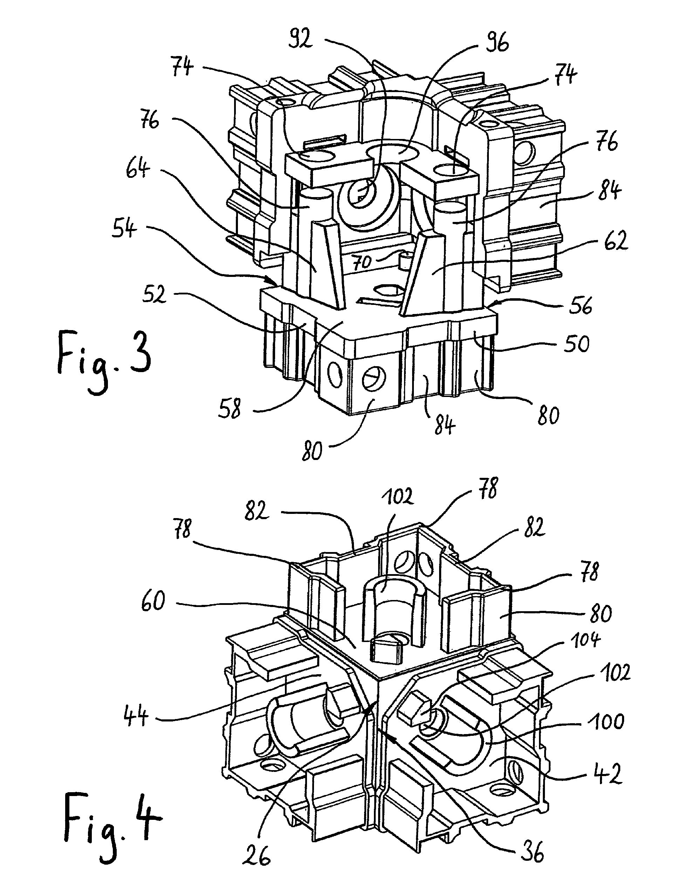

Der Eckverbinder 10 umfasst zwei Hauptbestandteile, ein Basiselement 14 sowie ein Zusatzelement 16. Das Basiselement 14 ist aus einem ersten Wandabschnitt 18 und einem zweiten Wandabschnitt 20 gebildet, die jeder vier Seitenränder 22, 24, 26, 28 und 30, 32, 34, 36, eine Innenseite 38, 40 und eine Außenseite 42, 44 aufweisen. Jeder Wandabschnitt 18, 20 ist im Wesentlichen plattenförmig und hat eine rechteckige, im dargestellten Ausführungsbeispiel im Wesentlichen quadratische Grundform. An den Seitenrändern 26 und 36 (siehe Fig. 4) sind der erste Wandabschnitt 18 und der zweite Wandabschnitt 20 unter Bildung eines Verbindungsrandes 46 rechtwinklig zueinander und einstückig miteinander verbunden.

Auf seiner Innenseite 38, 40 ist jeder Wandabschnitt 18, 20 mit einer ersten Führungs- und Verbindungsnut 48, 49 versehen, die sich von einem dem Verbindungsrand 46 benachbarten Seitenrand 24 bzw. 30 in einer Richtung parallel zum Verbindungsrand 46 erstreckt.

Das Zusatzelement 16 hat ebenfalls eine im Wesentlichen plattenförmige, rechteckige (hier im Wesentlichen quadratische) Grundform mit vier Seitenrändern 50, 52, 54, 56, einer Innenseite 58 und einer Außenseite 60.

Von der Innenseite 58 des Zusatzelements 16 stehen zwei Führungs- und Verbindungsvorsprünge 62, 64 im Wesentlichen senkrecht hervor, die an ihrer den Innenseiten 38 und 40 der Wandabschnitte 18, 20 zugewandten Seite komplementär zu den ersten Führungs- und Verbindungsnuten 48, 49 ausgebildet sind. Im gezeigten Ausführungsbeispiel sind die ersten Führungs- und Verbindungsnuten 48, 49 als Schwalbenschwanznuten ausgebildet und die Führungs- und Verbindungsvorsprünge 62, 64 lassen sich in einer zum Verbindungsrand 46 parallelen Richtung in die ersten Führungs- und Verbindungsnuten 48, 49 einschieben. Im vollständig eingeschobenen Zustand ist das Zusatzelement 16 bündig am Basiselement 14 festgelegt (siehe Fig. 4) und der plattenförmige Teil des Zusatzelements 16 bildet einen rechtwinklig zum ersten Wandabschnitt 18 und zum zweiten Wandabschnitt 20 angeordneten dritten Wandabschnitt 66. Aufgrund der schwalbenschwanzförmigen Ausbildung der ersten Führungs- und Verbindungsnuten 48, 49 ist das Zusatzelement 16 im Basiselement 14 stabil gehalten und hat als einzigen Freiheitsgrad seine Bewegbarkeit parallel zum Verbindungsrand 46 in einer Richtung außer Eingriff mit dem Basiselement 14.

Zur noch exakteren Zentrierung des Zusatzelements 16 im Basiselement 14 ist in letzterem nahe dem Verbindungsrand 46 eine parallel dazu verlaufende, sich konisch verjüngende Zentrierausnehmung 68 (siehe Fig. 1) vorhanden, in die beim Einschieben der Führungs- und Verbindungsvorsprünge 62, 64 in die Führungs- und Verbindungsnuten 48, 49 ein mit der Zentrierausnehmung 68 fluchtender, von der Innenseite 58 des Zusatzelements 16 hervorragender, konischer Zentriervorsprung 70 (siehe Fig. 3) eingreift. Im dargestellten Ausführungsbeispiel ist der Zentriervorsprung 70 kegelstumpfförmig ausgebildet (und die Zentrierausnehmung 68 komplementär dazu), jedoch kann der Zentriervorsprung beispielsweise auch pyramidenstumpfförmig sein oder einen sich zum freien Ende hin verjüngenden, quadratischen Querschnitt aufweisen, wobei die Zentrierausnehmung dann entsprechend angepasst ist.

Damit Momente, die von einem an dem Zusatzelement 16 befestigten Hohlprofil 12 auf das Zusatzelement 16 ausgeübt werden, in das Basiselement 14 eingeleitet werden können, ohne dass es zu einer Relativbewegung zwischen dem Zusatzelement 16 und dem Basiselement 14 kommt, steht von den Innenseiten 38, 40 der Wandabschnitte 18, 20 ein Stützflansch 72 rechtwinklig hervor, der mit zwei Stützausnehmungen 74 versehen ist, in die beim Einschieben der Führungs- und Verbindungsvorsprünge 62, 64 in die Führungs- und Verbindungsnuten 48, 49 ein an einem freien Ende des zugehörigen Führungs- und Verbindungsvorsprungs 62, 64 ausgebildeter, komplementärer Stützvorsprung 76 mit Passsitz eingreift (siehe auch Fig. 3). Mittels dieser Stützvorsprünge 76, die spielfrei oder leicht klemmend in die Stützausnehmungen 74 passen, ist das Zusatzelement 16 im Zusammenwirken mit der Zentrierausnehmung 68 und den Führungs- und Verbindungsnuten 48, 49 stabil und präzise im Basiselement 14 abgestützt, so dass relativ hohe Drehmomente von dem Zusatzelement 16 in das Basiselement 14 eingeleitet werden können, ohne dass es zu einer Relativbewegung zwischen dem Zusatzelement 16 und dem Basiselement 14 kommt.

Zur Positionierung und Zentrierung eines Hohlprofils 12 auf einem der Wandabschnitte 18, 20, 66 steht von der Außenseite jedes dieser Wandabschnitte an jeweils drei Ecken des plattenförmigen Grundkörpers ein Hohlprofilführungs- und -zentriervorsprung 78 im Wesentlichen senkrecht zur Außenseite des jeweiligen Wandabschnitts hervor. Im dargestellten Ausführungsbeispiel bildet jeder Hohlprofilführungs- und -zentriervorsprung 78 im Querschnitt einen rechten Winkel, der an der jeweiligen Ecke des Wandabschnitts angeordnet ist und dessen Außenfläche 80 im Wesentlichen komplementär zur Innenfläche des Hohlprofils 12 im zugehörigen Eckbereich ist. Die Außenfläche 80 verjüngt sich im dargestellten Ausführungsbeispiel zum freien Ende des Vorsprungs 78 hin konisch, wodurch ein Aufstecken eines Hohlprofils 12 vereinfacht wird und ein Endabschnitt des Hohlprofils 12 bei vollständigem Aufstecken auf die Vorsprünge 78 spielfrei und falls gewünscht leicht klemmend festgelegt ist.

Wie dargestellt sind im vorliegenden Ausführungsbeispiel die Hohlprofilführungs- und -zentriervorsprünge 78 entlang zweier Seitenränder durch Verbindungsvorsprünge 82 miteinander verbunden, deren Außenflächen 84 komplementär zur inneren Profilgestalt des Hohlprofils 12 ausgeführt sind. Auf diese Weise wird das aufgesteckte Hohlprofil 12 entlang eines großen Teils seines inneren Umfangs durch die Vorsprünge 78 und 82 gestützt und stabilisiert.

Fig. 2 zeigt ein hier als Gewindestange ausgeführtes Hohlprofilspannelement 86, das sich durch einen Hohlprofilspannelementaufnahmebereich 88 erstreckt, der durch abwechselnd ineinandergreifende, rohrförmig gebogene Laschen 90 des Hohlprofils 12 gebildet ist. Jeder Wandabschnitt 18, 20, 66 des Eckverbinders 10 ist mit einer Durchgangsöffnung 92 für einen Endabschnitt des Hohlprofilspannelements 86 versehen. Wie dargestellt ist der Querschnitt des Hohlprofilspannelements 86 nicht vollständig kreisförmig, sondern weist zwei Abflachungen 94 auf. Die Form jeder Durchgangsöffnung 92 entspricht der Querschnittsform des Hohlprofilspannelements 86, wodurch ein Verdrehen eines durch eine Durchgangsöffnung 92 geführten Hohlprofilspannelements 86 verhindert ist.

Der Stützflansch 72 ist mit einer weiteren Durchgangsöffnung 96 für ein Hohlprofilspannelement 86 versehen, die mit der Durchgangsöffnung 92 in dem Zusatzelement 16 fluchtet. Auf diese Weise kann ein Hohlprofilspannelement 86, welches sich durch die Durchgangsöffnung 92 des Zusatzelements 16 und weiter durch die Durchgangsöffnung 96 des Stützflansches 72 erstreckt, mit Hilfe einer Mutter 98 (siehe Fig. 2) verspannt werden, indem die Mutter 98 auf der vom Zusatzelement 16 abgewandten Seite des Stützflansches 72 gegen letzteren gekontert wird.

Bei einem Eckverbinder 10, der zur Aufnahme von Hohlprofilen 12 gedacht ist, wie sie in Fig. 2 dargestellt sind, steht von der Außenseite der Wandabschnitte 18, 20, 66 ein die Durchgangsöffnung 92 für das Hohlprofilspannelement 86 teilweise umgebender Stützvorsprung 100 hervor, dessen Innenumfangsfläche 102 zur radialen Stützung einer durch die Laschen 90 gebildeten Außenfläche des Hohlprofilspannelementaufnahmebereichs 88 ausgeführt ist. Zur weiteren Positionierung und Stützung des Hohlprofilspannelementaufnahmebereichs 88 eines Hohlprofils 12 steht ferner von der Außenseite der Wandabschnitte 18, 20, 66 nahe einem von dem Stützvorsprung 100 nicht umgebenen Bereich der Durchgangsöffnung 92 ein Positioniervorsprung 104 hervor (siehe Fig. 4), dessen der Durchgangsöffnung 92 zugewandte Fläche zum Eingriff mit der Außenfläche des Hohlprofilspannelementaufnahmebereichs 88 ausgeführt ist.

Sowohl das Basiselement 14 als auch das Zusatzelement 16 sind im gezeigten Ausführungsbeispiel jeweils einstückig als Stahlgussteile ausgeführt, könnten jedoch auch aus Aluminiumguss bestehen oder Kunststoffgussteile sein. Alternativ lassen sich das Basiselement 14 und das Zusatzelement 16 durch spanende Bearbeitung von Rohteilen herstellen.

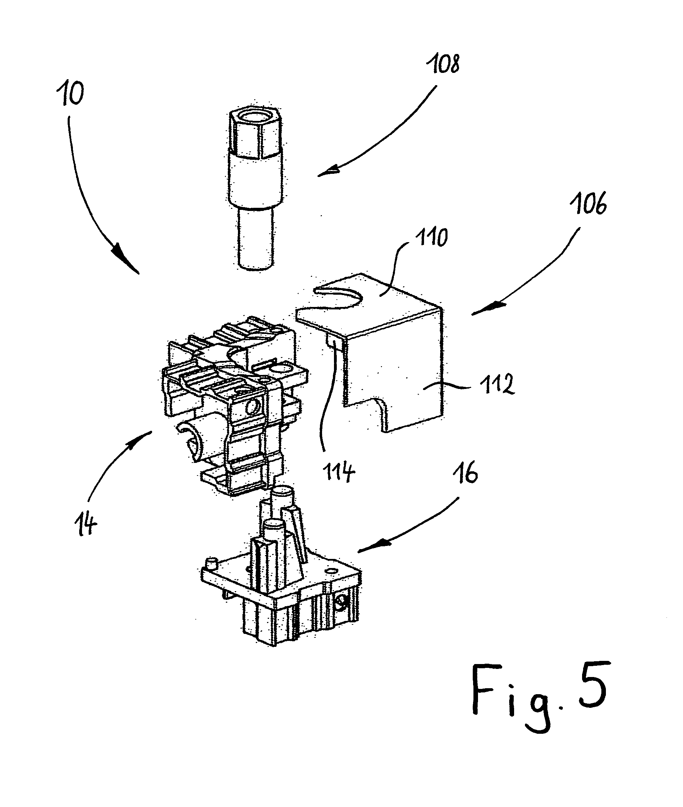

In Fig. 5 ist eine Explosionsdarstellung des Eckverbinders 10 mit seinem Basiselement 14, seinem Zusatzelement 16 und einer Abdeckkappe 106 sowie einer Spannschraube 108 gezeigt, die zum Verspannen eines in einem Hohlprofil 12 angeordneten Hohlprofilspannelements 86 zwischen zwei Eckverbindern 10 dient.

Die Abdeckkappe 106 besteht aus drei einstückig miteinander und im rechten Winkel zueinander verbundenen Wandabschnitten 110, 112, 114. Die Abdeckkappe 106 kann aus Kunststoff bestehen und beispielsweise als Kunststoffspritzgussteil ausgeführt sein, sie kann jedoch auch aus Metall bestehen und beispielsweise als ein Blechteil oder ein Gussteil ausgeführt sein.

Die Abdeckkappe 106 ist dazu ausgestaltet, auf dem Eckverbinder 10 befestigt zu werden, beispielsweise durch Verrasten. Im am Eckverbinder 10 befestigten Zustand setzen die Wandabschnitte 110, 112, 114 der Abdeckkappe 106 im Wesentlichen die zugehörigen äußeren Flächen der Hohlprofile 12 fort, die mittels eines Eckverbinders 10 miteinander verbunden worden sind.

## Patentansprüche

1. Eckverbinder (10) für Hohlprofile, mit:
- einem Basiselement (14), das aus einem ersten und einem zweiten, jeweils im Wesentlichen plattenförmigen, rechteckigen Wandabschnitt (18, 20) mit vier Seitenrändern (22, 24, 26, 28; 30, 32, 34, 36), einer Innenseite (38; 40) und einer Außenseite (42; 44) gebildet ist, wobei die zwei Wandabschnitte (18, 20) an jeweils einem einen Verbindungsrand (46) bildenden Seitenrand rechtwinklig zueinander und einstückig miteinander verbunden sind, wobei der erste und der zweite Wandabschnitt (18, 20) auf ihrer Innenseite (38; 40) jeweils mit einer ersten Führungs- und Verbindungsnut (48; 49) versehen ist, die sich von einem dem Verbindungsrand (46) benachbarten Seitenrand parallel zum Verbindungsrand (46) erstreckt, und
- wenigstens einem im Wesentlichen plattenförmigen, rechteckigen Zusatzelement (16) mit vier Seitenrändern (50, 52, 54, 56), einer Innenseite (58) und einer Außenseite (60), von dessen Innenseite (58) zwei zu den ersten Führungs- und Verbindungsnuten (48; 49) komplementäre Führungs- und Verbindungsvorsprünge (62, 64) hervorstehen, die in einer zum Verbindungsrand (46) parallelen Richtung in die ersten Führungs- und Verbindungsnuten (48; 49) einschiebbar sind und im vollständig eingeschobenen Zustand das Zusatzelement (16) zur Bildung eines rechtwinklig zum ersten und zweiten Wandabschnitt (18, 20) angeordneten dritten Wandabschnitts (66) bündig an dem Basiselement (14) festlegen.

2. Eckverbinder nach Anspruch 1,
**dadurch gekennzeichnet, dass** die ersten Führungs- und Verbindungsnuten (48; 49) hinterschnitten ausgebildet sind, beispielsweise in Gestalt einer Schwalbenschwanznut.

3. Eckverbinder nach Anspruch 1 oder 2,
**dadurch gekennzeichnet, dass** im Basiselement (14) nahe dem Verbindungsrand (46) eine parallel zum Verbindungsrand (46) verlaufende, sich konisch verjüngende Zentrierausnehmung (68) vorhanden ist, in die beim Einschieben der Führungs- und Verbindungsvorsprünge (62, 64) des Zusatzelements (16) in die ersten Führungsund Verbindungsnuten (48; 49) des Basiselements (14) ein mit der Zentrierausnehmung (68) fluchtender, von der Innenseite (58) des Zusatzelements (16) hervorragender konischer Zentriervorsprung (70) eingreift.

4. Eckverbinder nach einem der Ansprüche 1 bis 3,
**dadurch gekennzeichnet, dass** von der Innenseite des ersten und des zweiten Wandabschnitts (18, 20) jeweils ein Stützflansch (72) rechtwinklig hervorsteht, der mit einer Stützausnehmung (74) versehen ist, in die beim Einschieben der Führungs- und Verbindungsvorsprünge (62, 64) des Zusatzelements (16) in die ersten Führungsund Verbindungsnuten (48; 49) des Basiselements (14) ein an einem freien Ende des zugehörigen Führungs- und Verbindungsvorsprungs (62, 64) ausgebildeter, komplementärer Stützvorsprung (76) mit Passsitz eingreift.

5. Eckverbinder nach einem der vorhergehenden Ansprüche,
**dadurch gekennzeichnet, dass** der erste und der zweite Wandabschnitt (18, 20) auf seiner Innenseite (38; 40) jeweils mit einer zweiten Führungs- und Verbindungsnut versehen ist, die sich von einem dem Verbindungsrand (46) benachbarten Seitenrand, der dem Seitenrand gegenüber liegt, von dem sich die erste Führungs- und Verbindungsnut erstreckt, parallel zum Verbindungsrand (46) erstreckt und in die ein zugehöriger Führungs- und Verbindungsvorsprung (62, 64) eines weiteren Zusatzelements einschiebbar ist, um im vollständig eingeschobenen Zustand das weitere Zusatzelement zur Bildung eines rechtwinklig zum ersten und zweiten Wandabschnitt (18, 20) angeordneten vierten Wandabschnitts bündig an dem Basiselement (14) festzulegen.

6. Eckverbinder nach einem der vorhergehenden Ansprüche,
**dadurch gekennzeichnet, dass** jeder Wandabschnitt (18, 20, 66) mit einer Durchgangsöffnung (92) für ein Hohlprofilspannelement (86) versehen ist.

7. Eckverbinder nach Anspruch 6 in Verbindung mit Anspruch 4,
**dadurch gekennzeichnet, dass** sich durch den Stützflansch (72) eine weitere Durchgangsöffnung (96) erstreckt, die mit der Durchgangsöffnung (92) für ein Hohlprofilspannelement in dem Zusatzelement (16) fluchtet.

8. Eckverbinder nach Anspruch 6 oder 7,
**dadurch gekennzeichnet, dass** die Durchgangsöffnungen (92) für ein Hohlproflspannelement eine nicht rotationssymmetrische Form haben.

9. Eckverbinder nach einem der vorhergehenden Ansprüche,
**dadurch gekennzeichnet, dass** von der Außenseite der Wandabschnitte des Basiselements (14) und jedes Zusatzelements (16) an drei Ecken ein Hohlprofilführungs- und -zentriervorsprung (78) im Wesentlichen senkrecht zur Außenseite hervorsteht.

10. Eckverbinder nach Anspruch 9,
**dadurch gekennzeichnet, dass** eine Außenfläche (80) eines jeden Hohlprofilführungsund -zentriervorsprungs (78) sich zu seinem freien Ende hin konisch verjüngt.

11. Eckverbinder nach Anspruch 9 oder 10,
**dadurch gekennzeichnet, dass** die Hohlprofilführungs- und -zentriervorsprünge (78) entlang zweier Seitenränder durch Verbindungsvorsprünge (82) miteinander verbunden sind, deren Außenflächen (84) komplementär zur inneren Profilgestalt eines zu verbindenden Hohlprofiles gestaltet sind.

12. Eckverbinder nach einem der vorhergehenden Ansprüche und Anspruch 6,
**dadurch gekennzeichnet, dass** von der Außenseite der Wandabschnitte des Basiselements (14) und jedes Zusatzelements (16) ein die Durchgangsöffnung (92) für ein Hohlprofilspannelement teilweise umgebender Stützvorsprung (100) hervorsteht, dessen Innenumfangsfläche (102) zur radialen Stützung einer Außenfläche eines Hohlprofilspannelementaufnahmebereiches (88) eines Hohlprofils (12) ausgeführt ist.

13. Eckverbinder nach Anspruch 12,
**dadurch gekennzeichnet, dass** von der Außenseite der Wandabschnitte des Basiselements (14) und jedes Zusatzelements (16) nahe einem von dem Stützvorsprung (100) nicht umgebenen Bereich der Durchgangsöffnung (92) für ein Hohlprofilspannelement ein Positioniervorsprung (104) hervorsteht, dessen der Durchgangsöffnung (92) für ein Hohlprofilspannelement zugewandte Fläche zum Eingriff mit der Außenfläche eines Hohlprofilspannelementaufnahmebereiches (88) eines Hohlprofils (12) ausgeführt ist.

14. Eckverbinder nach Anspruch 12 oder 13,
**dadurch gekennzeichnet, dass** jede Durchgangsöffnung (92) für ein Hohlprofilspannelement nahe derjenigen Ecke eines Wandabschnitts angeordnet ist, an der auf der Außenseite kein Hohlprofilführungs- und -zentriervorsprung (78) hervorsteht.

15. Eckverbinder nach einem der vorhergehenden Ansprüche,
**dadurch gekennzeichnet, dass** das Basiselement (14) und/oder das Zusatzelement (16) ein Formgussteil ist.

## Claims

1. Corner connector (10) for hollow profiles, including:
- a base element (14), which is composed of a first and a second substantially plate-shaped and rectangular, respectively, wall section (18, 20) with four lateral edges (22, 24, 26, 28; 30, 32,34, 36), an inner side (38; 40) and an outer side (42; 44), wherein the two wall sections (18, 20) are connected at a right angle and in one piece to each other on one lateral edge that forms a connecting edge (46) in each case, wherein the first and the second wall section (18, 20) is each provided on their inner side (38; 40) with a first guide and connection groove (48; 49), which extends from a lateral edge adjacent to the connecting edge (46) parallel to the connecting edge (46), and
- at least one substantially plate-shaped, rectangular accessory element (16) with four lateral edges (50, 52, 54, 56), an inner side (58) and an outer side (60), protruding from the inner side (58) of which are two guide and connection projections (62, 64) that are complementary to the first guide and connection grooves (48; 49) and can be inserted into the first guide and connection grooves (48; 49) in a direction parallel to the connecting edge (46) and in the fully inserted state secure the accessory element (16) flush on the base element (14) to form a third wall section (66), which is arranged at a right angle to the first and second wall section (18, 20).

2. Corner connector according to claim 1,
**characterized in that** the first guide and connection grooves (48; 49) are formed with an undercut, for example in the shape of a dovetail groove.

3. Corner connector according to claim 1 or 2,
**characterized in that** a centering opening (68) is present in the base element (14) close to the connecting edge (46), which opening runs parallel to the connecting edge (46) and tapers conically, in which opening a conical centering projection (70), which is aligned with the centering opening (68) and protrudes from the inner side (58) of the accessory element (16), engages on insertion of the guide and connection projections (62, 64) of the accessory element (16) into the first guide and connection grooves (48; 49) of the base element (14).

4. Corner connector according to one of claims 1 to 3,
**characterized in that** a supporting flange (72) protrudes at a right angle from the inner side of the first and second wall section (18, 20) respectively, which flange is provided with a support opening (74), in which a complementary supporting projection (76) formed on a free end of the related guide and connection projection (62, 64) engages with a tight fit on insertion of the guide and connection projections (62, 64) of the accessory element (16) into the first guide and connection grooves (48; 49) of the base element (14).

5. Corner connector according to one of the preceding claims,
**characterized in that** the first and second wall section (18, 20) is provided on its inner side (38; 40) with a second guide and connection groove in each case, which extends from a lateral edge adjacent to the connecting edge (46), which lateral edge is opposite to the lateral edge from which the first guide and connection groove extends, parallel to the connecting edge (46) and into which a related guide and connection projection (62, 64) of a further accessory element is insertable, in order in the fully inserted state to secure the further accessory element flush on the base element (14) to form a fourth wall section arranged at a right angle to the first and second wall section (18, 20).

6. Corner connector according to one of the preceding claims,
**characterized in that** each wall section (18, 20, 66) is provided with a through opening (92) for a hollow profile tensioning element (86).

7. Corner connector according to claim 6 in connection with claim 4,
**characterized in that** a further through opening (96) extends through the supporting flange (72), which opening aligns with the through opening (92) for a hollow profile tensioning element in the accessory element (16).

8. Corner connector according to claim 6 or 7,
**characterized in that** the through openings (92) for a hollow profile tensioning element have a non-rotationally-symmetrical shape.

9. Corner connector according to one of the preceding claims,
**characterized in that** from the outer side of the wall sections of the base element (14) and of each accessory element (16) at three corners, a hollow profile guide and centering projection (78) protrudes substantially perpendicularly to the outer side.

10. Corner connector according to claim 9,
**characterized in that** an outer surface (80) of each hollow profile guide and centering projection (78) tapers conically to its free end.

11. Corner connector according to claim 9 or 10,
**characterized in that** the hollow profile guide and centering projections (78) are connected to one another along two lateral edges by connection projections (82), the outer surfaces (84) of which are shaped complementarily to the inner profile shape of a hollow profile to be connected.

12. Corner connector according to one of the preceding claims and claim 6,
**characterized in that** protruding from the outer side of the wall sections of the base element (14) and each accessory element (16) is a supporting projection (100) that partially surrounds the through opening (92) for a hollow profile tensioning element, the inner circumferential area (102) of which projection is executed for the radial support of an outer surface of a hollow profile tensioning element take-up region (88) of a hollow profile (12).

13. Corner connector according to claim 12,
**characterized in that** protruding from the outer side of the wall sections of the base element (14) and each accessory element (16), close to a region of the through opening (92) for a hollow profile tensioning element that is not surrounded by the supporting projection (100), is a positioning projection (104), the surface of which facing the through opening (92) for a hollow profile tensioning element is executed to engage with the outer surface of a hollow profile tensioning element take-up region (88) of a hollow profile (12).

14. Corner connector according to claim 12 or 13,
**characterized in that** each through opening (92) for a hollow profile tensioning element is arranged close to that corner of a wall section at which no hollow profile guide and centering projection (78) protrudes on the outer side.

15. Corner connector according to one of the preceding claims,
**characterized in that** the base element (14) and/or the accessory element (16) is a casting.

## Revendications

1. Dispositif d'assemblage d'angle (10) pour profilés creux, comprenant :
- un élément de base (14) qui est constitué d'une première et d'une deuxième section de paroi (18, 20) se présentant chacune sensiblement sous la forme d'une plaque rectangulaire dotée de quatre bords latéraux (22, 24, 26, 28 ; 30, 32, 34, 36), d'une face intérieure (38 ; 40) et d'une face extérieure (42 ; 44), ces deux sections de paroi (18, 20) étant reliées entre elles d'un seul tenant et perpendiculairement l'une par rapport à l'autre sur un bord latéral formant un bord d'assemblage (46), la première et la deuxième section de paroi (18, 20) étant respectivement pourvues, sur leur face intérieure (38 ; 40), d'une première gorge de guidage et d'assemblage (48 ; 49) qui s'étend parallèlement au bord d'assemblage (46), à partir d'un bord latéral adjacent audit bord d'assemblage (46), et
- au moins un élément supplémentaire (16) se présentant sensiblement sous la forme d'une plaque rectangulaire dotée de quatre bords latéraux (50, 52, 54, 56), d'une face intérieure (58) et d'une face extérieure (60), deux taquets de guidage et d'assemblage (62, 64) complémentaires auxdites premières gorges de guidage et d'assemblage (48 ; 49) faisant saillie de la face intérieure (58) de l'élément supplémentaire (16), ces deux taquets pouvant être insérés dans les gorges de guidage et d'assemblage (48 ; 49) dans une direction parallèle au bord d'assemblage (46) et assurant, en position d'insertion complète, la fixation de l'élément supplémentaire (16) en affleurement sur l'élément de base (14) pour former une troisième section de paroi (66) disposée perpendiculairement par rapport à la première et à la deuxième section de paroi (18, 20).

2. Dispositif d'assemblage d'angle selon la revendication 1,
**caractérisé en ce que** les premières gorges de guidage et d'assemblage (48 ; 49) sont réalisées en contre-dépouille, par exemple sous la forme d'une gorge en queue d'aronde.

3. Dispositif d'assemblage d'angle selon la revendication 1 ou 2,
**caractérisé en ce qu'**est ménagé à l'intérieur de l'élément de base (14), près du bord d'assemblage (46), un évidement de centrage (68) allant en se rétrécissant de manière conique et s'étendant parallèlement au bord d'assemblage (46), dans lequel évidement vient s'emboîter un plot de centrage (70) conique faisant saillie de la face intérieure (58) de l'élément supplémentaire (16) et en alignement avec l'évidement de centrage (68) lorsque les taquets de guidage et d'assemblage (62, 64) de l'élément supplémentaire (16) sont insérés dans les premières gorges de guidage et d'assemblage de l'élément de base (14).

4. Dispositif d'assemblage d'angle selon l'une des revendications 1 à 3,
**caractérisé en ce qu'**une flasque d'appui (72) fait respectivement perpendiculairement saillie de la face intérieure de la première et de la deuxième section de paroi (18, 20), laquelle flasque est pourvue d'un évidement d'appui (74) dans lequel vient s'emboîter par engagement ajusté une saillie d'appui (76) complémentaire formée à une extrémité libre du taquet de guidage et d'assemblage (62, 64) correspondant lorsque les taquets de guidage et d'assemblage (62, 64) de l'élément supplémentaire (16) sont insérés dans les premières gorges de guidage et d'assemblage de l'élément de base (14).

5. Dispositif d'assemblage d'angle selon l'une des revendications précédentes,
**caractérisé en ce que** la première et la deuxième section de paroi (18, 20) sont chacune pourvues sur leur face intérieure (38 ; 40) d'une deuxième gorge de guidage et d'assemblage qui s'étend parallèlement par rapport au bord d'assemblage (46), à partir d'un bord latéral adjacent au bord d'assemblage (46) et situé à l'opposé du bord latéral d'où s'étend la première gorge de guidage et d'assemblage, et dans laquelle peut être inséré un taquet de guidage et d'assemblage (62, 64) correspondant ménagé dans un autre élément supplémentaire pour assurer, en position complètement insérée, la fixation dudit autre élément supplémentaire (16) en affleurement sur l'élément de base (14) afin de former une quatrième section de paroi (66) disposée perpendiculairement par rapport à la première et à la deuxième section de paroi (18, 20).

6. Dispositif d'assemblage d'angle selon l'une des revendications précédentes,
**caractérisé en ce que** chaque section de paroi (18, 20, 66) est pourvue d'une ouverture traversante (92) pour le passage d'un élément de serrage de profilé creux (86).

7. Dispositif d'assemblage d'angle selon la revendication 6 en relation avec la revendication 4,
**caractérisé en ce que** s'étend à travers la flasque d'appui (72) une autre ouverture traversante (96) qui est en alignement avec l'ouverture traversante (92) ménagée dans l'élément supplémentaire (16) pour le passage de l'élément de serrage de profilé creux.

8. Dispositif d'assemblage d'angle selon la revendication 6 ou 7,
**caractérisé en ce que** les ouvertures traversantes (92) destinées au passage d'un élément de serrage de profilé creux possèdent une forme non symétrique de révolution.

9. Dispositif d'assemblage d'angle selon l'une des revendications précédentes,
**caractérisé en ce qu'**une partie saillante de guidage et de centrage de profilé creux (78) dépasse, à trois angles, de la face extérieure des sections de paroi de l'élément de base (14) et de chaque élément supplémentaire (16), dans une direction sensiblement perpendiculaire à ladite face extérieure.

10. Dispositif d'assemblage d'angle selon la revendication 9,
**caractérisé en ce qu'**une surface extérieure (80) de chaque partie saillante de guidage et de centrage de profilé creux (78) va en se rétrécissant de manière conique dans la direction de son extrémité libre.

11. Dispositif d'assemblage d'angle selon la revendication 9 ou 10,
**caractérisé en ce que** les parties saillantes de guidage et de centrage de profilé creux (78) sont reliées entre elles le long de deux bords latéraux par des saillies d'assemblage (82) dont les surfaces extérieures (84) sont conçues de manière complémentaire au dessin intérieur d'un profilé creux à assembler.

12. Dispositif d'assemblage d'angle selon l'une des revendications précédentes et selon la revendication 6,
**caractérisé en ce qu'**une saillie d'appui (100), qui entoure partiellement l'ouverture traversante (92) destinée au passage de l'élément de serrage de profilé creux et dont la surface circonférentielle intérieure (102) est réalisée pour supporter radialement une surface extérieure d'une zone de logement d'élément de serrage pour profilé creux (12), dépasse de la face extérieure des sections de paroi de l'élément de base (14) et de chaque élément supplémentaire (16).

13. Dispositif d'assemblage d'angle selon la revendication 12,
**caractérisé en ce qu'**une saillie de positionnement (104), dont la surface tournée vers l'ouverture traversante (92) destinée au passage de l'élément de serrage de profilé creux est réalisée pour venir en prise avec la surface extérieure d'une zone de logement (88) d'élément de serrage pour profilé creux (12), dépasse de la face extérieure des sections de paroi de l'élément de base (14) et de chaque élément supplémentaire (16), à proximité d'une zone non entourée par la saillie d'appui (100) de l'ouverture traversante (92) destinée au passage de l'élément de serrage de profilé creux.

14. Dispositif d'assemblage d'angle selon la revendication 12 ou 13,
**caractérisé en ce que** chaque ouverture traversante (92) destinée au passage d'un élément de serrage de profilé creux est disposée à proximité de l'angle d'une section de paroi qui est exempt de partie saillante de guidage et de centrage de profilé creux (78) dépassant de la face extérieure.

15. Dispositif d'assemblage d'angle selon l'une des revendications précédentes,
**caractérisé en ce que** l'élément de base (14) et/ou l'élément supplémentaire (16) consistent respectivement en une pièce moulée.
